# EUROPEAN PATENT APPLICATION

(11) **EP 4 286 459 A1**
(43) Date of publication of application: **06.12.2023**
(21) Application number: 22746035.9
(22) Date of filing: 28.01.2022
(51) Int. Cl.: C08J 5/18, B65D 65/46, C08L 29/04, C11D 17/04

(54) **WATER-SOLUBLE FILM AND CHEMICAL AGENT PACKAGE**

(30) Priority: 29.01.2021 JP 2021012923
(71) Applicant: Mitsubishi Chemical Corporation, Chiyoda-ku Tokyo 100-8251 (JP)
(72) Inventor: TAKAKURA Taisuke, Tokyo 100-8251 (JP)
(74) Representative: Kuhnen & Wacker Patent- und Rechtsanwaltsbüro PartG mbB
(86) International application number: PCT/JP2022/003338
(87) International publication number: WO 2022/163816

(57) **Abstract**

A water-soluble film is provided, which is useful for packages and has an improved package breakage resistance when such a package is formed from the film by deep drawing for packaging a chemical agent such as liquid detergent and immersed in water, i.e., which is capable of suppressing the early leakage and the early dissolution of the chemical agent. The water-soluble polyvinyl alcohol film mainly containing a polyvinyl alcohol resin (A), wherein the polyvinyl alcohol resin (A) includes: a polyvinyl alcohol resin (a1) having a 4 mass % aqueous solution viscosity of not lower than 21 mPa•s at 20°C as a main component of the polyvinyl alcohol resin (A); and a polyvinyl alcohol (a2) resin satisfying the following requirements (α) and (β) with respect to the polyvinyl alcohol resin (a1):
(α) the polyvinyl alcohol resin (a2) has a 4 mass % aqueous solution viscosity that is higher than the 4 mass % aqueous solution viscosity of the polyvinyl alcohol resin (a1) as measured at 20°C; and
(β) a difference in average saponification degree between the polyvinyl alcohol resin (a1) and the polyvinyl alcohol resin (a2) is not greater than 5 mol % in absolute value.

## Description

### TECHNICAL FIELD

The present disclosure relates to a water-soluble film containing a polyvinyl alcohol resin as a main component, and a chemical agent package. More specifically, the present disclosure relates to a water-soluble film which has an improved package breakage resistance when a package is formed from the film by deep drawing for packaging a chemical agent such as liquid detergent and immersed in water, i.e., which is capable of suppressing the early leakage and the early dissolution of the chemical agent such as the liquid detergent packaged with the film, and to a chemical agent package.

### BACKGROUND ART

A polyvinyl alcohol film is made of a polyvinyl alcohol resin that is a thermoplastic resin and yet is water-soluble. The polyvinyl alcohol film is conventionally used as a water-soluble film which is soluble in water due to the water solubility of the polyvinyl alcohol, and is utilized in a wide range of application fields. Specifically, the polyvinyl alcohol film is used for packaging applications (unit packaging applications) for chemical agents such as agricultural agents and detergents, (water pressure) transfer films, sanitary supplies such as sanitary napkins and disposable diapers, waste disposal supplies such as ostomy bags, medical supplies such as blood-absorbing sheets, and temporary base materials for seeding sheets, seeding tapes, and embroidery bases.

Of these, the unit packaging applications for the chemical agents such as the agricultural agents and the detergents are advantageous in that it is possible to save time and effort required for measuring out a necessary amount of the chemical agent and to prevent the contamination of hands with the chemical agent when the chemical agent is used. Particularly, unit packaging applications (individual packaging applications) for liquid products such as liquid detergents are expanding.

For example, there is proposed a water-soluble film which has a satisfactory water solubility and is useful for individual packages, i.e., when being formed into a package with liquid such as liquid detergent packaged therein, ensures a higher seal strength of a sealed portion of the package and prevents liquid leakage (see, for example, PTL 1).

### RELATED ART DOCUMENT

### PATENT DOCUMENT

PTL 1: WO2017/043511

### SUMMARY

Such an individual package typically has one or more compartments which are different in shape and size. In recent years, particularly, an individual package for a liquid detergent is designed as including compartments having complicated shapes and sizes for improvement of washing performance and designability, and the individual package is formed by deep drawing. Where a conventional water-soluble film is used for the formation of an individual package by the deep drawing, however, the resulting individual package is liable to be broken in a shorter period of time when being immersed in water, resulting in early leakage of the liquid detergent or a like chemical agent. This makes it impossible to provide a proper washing effect, and poses a problem associated with accidental swallowing of the individual package, requiring further improvement.

In view of the forgoing, the present disclosure provides a water-soluble film which is useful for packages and has an improved package breakage resistance when such a package is formed from the film by deep drawing for packaging a chemical agent such as liquid detergent and immersed in water, i.e., which is capable of suppressing the early leakage and the early dissolution of the chemical agent such as the liquid detergent packaged with the film, and to a chemical agent package formed by packaging any of various chemical agents with the water-soluble film.

In view of the foregoing, the inventor of the present disclosure conducted intensive studies on the cause of the early breakage (dissolution) of the individual package occurring when the package is immersed in water, and found that the film is liable to be partly excessively stretched by the deep drawing to partly have a reduced thickness and, therefore, the uniform stretchability of the film is important. The inventor further conducted research aiming to ensure the uniform stretchability of the film even in the deep drawing. As a result, the inventor found that a balance between the compatibilized state of polyvinyl alcohol resins and the polymer chains of the polyvinyl alcohol resins of in the film is important for the uniform stretchability (in the present disclosure, for suppression of the local film thickness reduction) and found that, where the polyvinyl alcohol resins to be used include a main component polyvinyl alcohol resin and another polyvinyl alcohol resin having a higher viscosity and an average saponification degree slightly different from that of the major component polyvinyl alcohol resin, it is possible to impart the film with the uniform stretchability even in the deep drawing and to ensure an excellent package breakage resistance when the individual package is formed from the film and is immersed in water.

The present disclosure has the following features:
<1> A water-soluble polyvinyl alcohol film is provided, which mainly contains a polyvinyl alcohol resin (A), wherein the polyvinyl alcohol resin (A) includes: (a1) a polyvinyl alcohol resin having a 4 mass % aqueous solution viscosity of not lower than 21 mPa•s at 20°C as a main component of the polyvinyl alcohol resin (A); and (a2) a polyvinyl alcohol resin satisfying the following requirements (α) and (β) with respect to the polyvinyl alcohol resin (a1):
   (α) the polyvinyl alcohol resin (a2) has a 4 mass % aqueous solution viscosity that is higher than the 4 mass % aqueous solution viscosity of the polyvinyl alcohol resin (a1) as measured at 20°C; and
   (β) a difference in average saponification degree between the polyvinyl alcohol resin (a1) and the polyvinyl alcohol resin (a2) is not greater than 5 mol % in absolute value.
<2> In the water-soluble film according to <1>, the polyvinyl alcohol resin (a1) and the polyvinyl alcohol resin (a2) are present in a mass ratio (a1)/(a2) of 99/1 to 50/50.
<3> In the water-soluble film according to <1> or <2>, the polyvinyl alcohol resin (a1) is a modified polyvinyl alcohol resin.
<4> In the water-soluble film according to any one of <1> to <3>, the polyvinyl alcohol resin (a2) is an unmodified polyvinyl alcohol.
<5> In the water-soluble film according to any one of <1> to <4>, the polyvinyl alcohol resin (a2) has an average saponification degree of 90 to 99.9 mol %.
<6> The water-soluble film according to any one of <1> to <5> further contains not greater than 6 parts by mass of a filler (C) based on 100 parts by mass of the polyvinyl alcohol resin (A).
<7> A chemical agent package includes: a package bag formed from the water-soluble film according to any one of <1> to <6>; and a chemical agent packaged in the package bag.

The water-soluble film of the present disclosure has an improved package breakage resistance when a package is formed from the film by deep drawing for packaging a chemical agent such as liquid detergent and is immersed in water, i.e., is capable of suppressing the early leakage and the early dissolution of the chemical agent.

### DESCRIPTION OF EMBODIMENTS

The present disclosure will hereinafter be described specifically.

In the present disclosure, an expression "X to Y" (wherein X and Y are given numbers) means "not less than X and not greater than Y" and is intended to also mean "preferably greater than X" or "preferably smaller than Y" unless otherwise specified.

An expression "not less than X" (wherein X is a given number) or "not greater than Y" (wherein Y is a given number) is intended to also mean "preferably greater than X" or "preferably less than Y."

In the present disclosure, a polyvinyl alcohol is often abbreviated as "PVA" and a film mainly containing a polyvinyl alcohol resin is often referred to simply as "PVA film." Further, a water-soluble film mainly containing a polyvinyl alcohol resin is often referred to simply as "water-soluble PVA film."

A water-soluble film according to the present disclosure is a PVA film mainly containing a PVA resin (A).

The expression "mainly containing a PVA resin (A)" means that the PVA resin (A) is typically contained in a proportion of not less than 50 mass %, preferably not less than 55 mass %, particularly preferably not less than 60 mass %, of the entire water-soluble film. If the proportion of the PVA resin (A) is excessively small, the film tends to have a lower solubility in water and poorer mechanical properties. The upper limit of the proportion of the PVA resin (A) is typically not greater than 99 mass %, preferably not greater than 95 mass %, particularly preferably not greater than 90 mass %, from the viewpoint of the long-term shape stability of a liquid detergent package formed with the use of the film.

The water-soluble film herein means a film that is soluble in water at an ordinary temperature (about 20°C).

In the present disclosure, the solubility of the film can be evaluated in the following manner:
A test sample is prepared by cutting the PVA film to a size of 3 cm × 5 cm, and put in a 1-L beaker containing water (1 L) and fixed by a jig. Then, the water is stirred by a stirrer (having a rotor length of 3 cm and rotated at a speed of 750 rpm) while being maintained at a temperature of 20°C. When dispersion of any insoluble particulate pieces of the film test sample having a diameter of 1 mm or greater is not visually observed, it is considered that the film test sample is dissolved.

### [PVA Resin (A)]

First, the PVA resin (A) to be used in the present disclosure will be described.

The PVA resin (A) to be used in the present disclosure includes two or more types of PVA resins that are each selected from an unmodified PVA and a modified PVA resin, and are different in at least one of average saponification degree, viscosity, modification species, and modification degree. The PVA resin (A) includes: (a1) a first PVA resin as a main component of the PVA resin (A); and (a2) a second PVA resin satisfying the following requirements (α) and (β) with respect to the first PVA resin (a1):
(α) the PVA resin (a2) has a 4 mass % aqueous solution viscosity that is higher than that of the PVA resin (a1) as measured at 20°C; and
(β) a difference in average saponification degree between the PVA resin (a1) and the PVA resin (a2) is not greater than 5 mol % in absolute value.

The PVA resin (a1), which is the main component of the PVA resin (A), is a PVA resin present in the greatest proportion (mass %) in the PVA resin (A). Where two or more PVA resins are present in the same greatest proportion in the PVA resin (A), one of such PVA resins is defined as the PVA resin (a1) (the main component of the PVA resin (A)), and another of the PVA resins satisfying the requirements (α) and (β) is defined as the PVA resin (a2). Further, the other PVA resin(s) not satisfying the requirements (α) and (β) is defined as a third PVA resin (a3). That is, where one of the PVA resins is defined as the PVA resin (a1), a PVA resin (A) containing the PVA resin (a2) that satisfies the requirements for the viscosity and the saponification degree with respect to the PVA resin (a1) falls within the scope of the present disclosure. In this case, where another of the PVA resins is defined as the PVA resin (a1), the other PVA resins may include the PVA resin (a2) satisfying the requirements (α) and (β) (if any, defined as the PVA resin (a2)), and the PVA resin (a3) not satisfying the requirements (α) and (β).

The PVA resin (a2) may be a PVA resin satisfying the specific requirements (α) and (β) for the viscosity and the saponification degree with respect to the PVA resin (a1). As the PVA resin (a2), one such PVA resin may be used alone, or two or more such PVA resins may be used in combination. That is, where the PVA resin (A) include three or more types of PVA resins, the PVA resin (a2) may include only one PVA resin (a2) or may include two or more PVA resins (a2). Where the PVA resin (a2) include two or more PVA resins (a2), these PVA resins (a2) should each merely satisfy the requirements for the viscosity and the saponification degree with respect to the PVA resin (a1).

In the present disclosure, the PVA resin (A) may include the PVA resin (a3) in addition to the PVA resin (a1) and the PVA resin (a2). The PVA resin (a3) is a PVA resin that is selected from an unmodified PVA and a modified PVA resin and is different in at least one of average saponification degree, viscosity, modification species, and modification degree from the PVA resin (a1) and the PVA resin (a2). As the PVA resin (a3), one such PVA resin may be used alone, or two or more such PVA resins may be used in combination.

In the present disclosure, it is necessary, from the viewpoint of the uniform film stretchability, that the 4 mass % aqueous solution viscosity of the PVA resin (a2) is higher than the 4 mass % aqueous solution viscosity of the PVA resin (a1) as measured at 20°C, and a difference in 4 mass % aqueous solution viscosity at 20°C between the PVA resin (a2) and the PVA resin (a1) is preferably not less than 0.1 mPa•s, more preferably not less than 0.5 mPa•s, not less than 1 mPa•s, not less than 1.5 mPa•s, not less than 2 mPa•s, not less than 3 mPa•s, not less than 5 mPa•s, not less than 10 mPa•s. The upper limit of the viscosity difference is preferably not greater than 45 mPa•s, more preferably not greater than 40 mPa•s, not greater than 35 mPa•s.

If the difference in 4 mass % aqueous solution viscosity at 20°C is excessively small, it tends to be difficult to provide the effect of the present disclosure. If the difference in 4 mass % aqueous solution viscosity at 20°C is excessively great, the film formability tends to be reduced in a film production process.

In the present disclosure, it is important that the difference in average saponification degree between the PVA resin (a1) and the PVA resin (a2) is not greater than 5 mol %, preferably not greater than 4.5 mol %, particularly preferably not greater than 4 mol %, in absolute value.

Where the absolute value of the average saponification degree difference is thus reduced, it is possible to improve the compatibility of the PVA resins to ensure more uniform film stretchability and, hence, to suppress the early leakage and the early dissolution of a chemical agent when a chemical liquid package is formed with the use of the film and is immersed in water.

The average saponification degree is measured in conformity with JIS K6726 3.5, and the 4 mass % aqueous solution viscosity is measured in conformity with JIS K6726 3.11.2.

The PVA resin (a1) to be used in the present disclosure preferably has an average saponification degree of not less than 80 mol %, particularly preferably 82 to 99.9 mol %, more preferably 85 to 99 mol %, especially preferably 86 to 98 mol %. If the average saponification degree of the PVA resin (a1) is excessively small, the solubility of the PVA film in water tends to be reduced. If the average saponification degree is excessively great, the solubility of the PVA film in water also tends to be reduced.

The 4 mass % aqueous solution viscosity of the PVA resin (a1) is not lower than 21 mPa•s, preferably 21 to 50 mPa•s, particularly preferably 21.5 to 45 mPa•s, more preferably 22 to 40 mPa•s, as measured at 20°C. If the viscosity of the PVA resin (a1) is excessively low, the film as a packaging material tends to have a reduced mechanical strength. If the viscosity of the PVA resin (a1) is excessively high, an aqueous solution to be used for film formation tends to have a higher viscosity, thereby reducing the productivity.

The PVA resin (a2) to be used in the present disclosure preferably has an average saponification degree of not less than 80 mol %, particularly preferably 83 to 99.9 mol %, more preferably 85 to 99 mol %, especially preferably 86 to 98 mol %. If the average saponification degree of the PVA resin (a2) is excessively small, the solubility of the PVA film in water tends to be reduced. Further, the film tends to be poorer in uniform stretchability. If the average saponification degree is excessively great, the solubility of the PVA film in water also tends to be reduced.

For the improvement of the mechanical properties of the film and the solubility of the film in the deep drawing, the average saponification degree of the PVA resin (a2) is preferably not less than the average saponification degree of the PVA resin (a1). Further, the average saponification degree of the PVA resin (a2) is preferably greater than the average saponification degree of the PVA resin (a1).

The 4 mass % aqueous solution viscosity of the PVA resin (a2) is higher than 21 mPa•s, preferably 21.5 to 60 mPa•s, particularly preferably 25 to 55 mPa•s, as measured at 20°C. If the viscosity of the PVA resin (a2) is excessively low, the film tends to be poorer in uniform stretchability. If the viscosity of the PVA resin (a2) is excessively great, on the other hand, the viscosity of the aqueous solution to be used for the film formation tends to be increased, thereby reducing the productivity.

The mass ratio (a1)/(a2) of the PVA resin (a1) to the PVA resin (a2) is preferably 99/1 to 50/50, particularly preferably 99/1 to 51/49, more preferably 95/5 to 55/45, especially preferably 94/6 to 60/40.

If the mass ratio is excessively small, it tends to be impossible to ensure the uniform stretchability. If the mass ratio is excessively great, the film formability tends to be reduced, thereby reducing the productivity.

The proportion of the PVA resin (a2) in the PVA resin (A) is preferably 1 to 50 mass %, particularly preferably 3 to 40 mass %, more preferably 5 to 30 mass %.

If the proportion of the PVA resin (a2) is excessively small, it tends to be impossible to ensure the uniform stretchability. If the proportion of the PVA resin (a2) is excessively great, the film formability tends to be reduced, thereby reducing the productivity.

The proportion of the PVA resin (a3) in the PVA resin (A) is preferably not greater than 49 mass %, particularly preferably not greater than 5 mass %, and the lower limit of the proportion of the PVA resin (a3) is typically 0 mass %. If the proportion of the PVA resin (a3) is excessively great, it tends to be difficult to provide the effect of the present disclosure.

The PVA resin (a1) and the PVA resin (a2) to be used in the present disclosure are each selected from an unmodified PVA and a modified PVA resin.

The unmodified PVA is a resin produced by polymerizing a vinyl ester compound and saponifying the resulting vinyl ester polymer, and mainly containing a vinyl alcohol structural unit. The unmodified PVA contains the vinyl alcohol structural unit in an amount corresponding to the saponification degree thereof, and contains a vinyl ester structural unit left unsaponified.

Examples of the vinyl ester compound include vinyl formate, vinyl acetate, vinyl trifluoroacetate, vinyl propionate, vinyl butyrate, vinyl caprate, vinyl laurate, vinyl versatate, vinyl palmitate, and vinyl stearate. Of these, vinyl acetate is preferably used. These vinyl ester compounds may be each used alone, or two or more of these vinyl ester compounds may be used in combination.

The modified PVA resin may be produced by copolymerizing the vinyl ester compound and an unsaturated monomer copolymerizable with the vinyl ester compound, and then saponifying the resulting copolymer. The modified PVA resin may be produced by polymerizing the vinyl ester compound, saponifying the resulting polyvinyl ester resin, and introducing a modifying group into the resulting resin mainly containing the vinyl alcohol structural unit by copolymerization or post reaction. The modified PVA resin contains the vinyl alcohol structural unit in an amount corresponding to the saponification degree thereof, and further contains the vinyl ester structural unit left unsaponified, and an unsaturated monomer structural unit incorporated by the copolymerization or a structural unit introduced by the post reaction.

Examples of the unsaturated monomer copolymerizable with the vinyl ester compound include: olefins such as ethylene, propylene, isobutylene, α-octene, α-dodecene, and a-octadecene-, hydroxyl-containing α-olefins such as 3-buten-1-ol, 4-penten-1-ol, and 5-hexen-1-ol, and acylation products and other derivatives of these hydroxyl-containing α-olefins; unsaturated acids such as acrylic acid, methacrylic acid, crotonic acid, maleic acid, maleic anhydride, itaconic acid, and undecylenic acid, and salts, monoesters, and dialkyl esters of these unsaturated acids; amides such as diacetoneacrylamide, acrylamide, and methacrylamide; and olefinsulfonic acids such as ethylenesulfonic acid, allylsulfonic acid, and methallylsulfonic acid, and salts of these olefinsulfonic acids. These may be each used alone, or two or more of these may be used in combination.

The modified PVA resin preferably has a primary hydroxyl group in its side chain. For example, the number of primary hydroxyl groups in the side chain is typically 1 to 5, preferably 1 to 2, particularly preferably 1. Further, the modified PVA resin preferably has a secondary hydroxyl group in addition to the primary hydroxyl group. Examples of the modified PVA resin include a PVA resin having a hydroxyalkyl group in its side chain and a PVA resin having a 1,2-diol structural unit in its side chain. The PVA resin having the 1,2-diol structural unit in its side chain may be produced, for example, by: (1) a method in which a copolymer of vinyl acetate and 3,4-diacetoxy-1-butene is saponified; (2) a method in which a copolymer of vinyl acetate and vinyl ethylene carbonate is saponified and decarbonated; (3) a method in which a copolymer of vinyl acetate and 2,2-dialkyl-4-vinyl-1,3-dioxolane is saponified and deketalized; and (4) a method in which a copolymer of vinyl acetate and glycerin monoallyl ether is saponified.

In the present disclosure, an anionic group-modified PVA resin is preferably used as the modified PVA resin from the viewpoint of the solubility. Examples of the anionic group include carboxyl group, sulfonate group, and phosphate group. From the viewpoint of the chemical resistance and the long-term stability, the carboxyl group and the sulfonate group are preferred, and the carboxyl group is particularly preferred.

Where the carboxyl group-modified PVA resin is used in the present disclosure, a maleic acid-modified PVA resin and an itaconic acid-modified PVA resin are preferred for excellent handlability, higher polymerization reactivity with the vinyl ester monomer, and higher productivity. Particularly, the maleic acid-modified PVA resin is preferably used from the viewpoint of the long-term stability of the solubility of the film, particularly, when the chemical agent is packaged with the film (because the film is made less susceptible to the pH of the chemical agent). From the viewpoint of the mechanical properties of the film, an acrylic acid-modified PVA resin is preferred.

The unmodified PVA and the modified PVA resin can be each produced by a production method known in the art, for example, by a production method disclosed in WO2017/043511 and the like.

The unmodified PVA to be used in the present disclosure preferably has an average saponification degree of not less than 80 mol %, particularly preferably 80 to 99.9 mol %, more preferably 82 to 99 mol %, especially preferably 85 to 98 mol %. If the average saponification degree of the unmodified PVA is excessively small, the solubility of the PVA film in water tends to be reduced. If the average saponification degree of the unmodified PVA is excessively great, the solubility of the film in water also tends to be reduced.

The unmodified PVA to be used in the present disclosure preferably has a 4 mass % aqueous solution viscosity of 8 to 60 mPa•s, particularly preferably 10 to 60 mPa•s, as measured at 20°C. If the viscosity of the unmodified PVA is excessively low, the PVA film as the packaging material tends to have a reduced mechanical strength. If the viscosity of the unmodified PVA is excessively high, the viscosity of the aqueous solution to be used for the film formation tends to be increased, thereby reducing the productivity.

The modified PVA resin to be used in the present disclosure preferably has an average saponification degree of not less than 80 mol %, particularly preferably 85 to 99.9 mol %, more preferably 90 to 99 mol %, especially preferably 92 to 99 mol %. If the average saponification degree of the modified PVA resin is excessively small, the solubility of the film in water tends to be reduced over time depending on the pH of the chemical agent packaged with the film. If the average saponification degree of the modified PVA resin is excessively great, the solubility of the film in water tends to be significantly reduced.

The modified PVA resin to be used in the present disclosure preferably has a 4 mass % aqueous solution viscosity of 8 to 50 mPa•s, particularly preferably 15 to 45 mPa•s, more preferably 20 to 40 mPa•s, as measured at 20°C. If the viscosity of the modified PVA resin is excessively low, the PVA film as the packaging material tends to have a reduced mechanical strength. If the viscosity of the modified PVA resin is excessively high, the viscosity of the aqueous solution to be used for the film formation tends to be increased, thereby reducing the productivity.

The modified PVA resin to be used in the present disclosure preferably has a modification degree of 1 to 20 mol %, more preferably 1.5 to 15 mol %, particularly preferably 2 to 12 mol %, especially preferably 2 to 6 mol %. If the modification degree is excessively small, the solubility of the PVA film in water tends to be reduced. If the modification degree is excessively great, the productivity and the biodegradability of the PVA resin tend to be reduced. Further, the blocking of the film is liable to occur.

In the present disclosure, at least one of the PVA resins of the PVA resin (A) is preferably the modified PVA resin from the viewpoint of the solubility. Particularly, the PVA resin (a1) is preferably the modified PVA resin. From the viewpoint of the long-term stability of the solubility of the film, the PVA resin (a1) is particularly preferably the anionic group-modified PVA resin, more preferably the carboxyl group-modified PVA resin.

In the present disclosure, at least one of the PVA resins of the PVA resin (A) is preferably the unmodified PVA from the viewpoint of the mechanical properties, the water sealability, and the uniform stretchability of the film. Particularly, the PVA resin (a2) is preferably the unmodified PVA.

Specific preferred embodiments of the present disclosure are such that: (1) the PVA resin (a1) and the PVA resin (a2) are each the modified PVA resin; (2) the PVA resin (a1) is the modified PVA resin and the PVA resin (a2) is the unmodified PVA; and (3) the PVA resin (a1) and the PVA resin (a2) are each the unmodified PVA. From the viewpoint of the long-term stability of the solubility, the embodiments (1) and (2) are preferred, and the embodiment (2) is particularly preferred.

In the embodiments (1) and (2), in which the PVA resin (a1) is the modified PVA resin, the average saponification degree of the PVA resin (a1) is preferably not less than 85 mol %, particularly preferably 90 to 99.9 mol %, more preferably 92 to 99.5 mol %, especially preferably 93 to 99 mol %. If the average saponification degree of the PVA resin (a1) is excessively small, the solubility of the PVA film in water tends to be reduced, or the solubility of the film in water tends to be reduced over time depending on the pH of the chemical agent packaged with the film. If the average saponification degree of the PVA resin (a1) is excessively great, the solubility of the film in water also tends to be reduced.

The 4 mass % aqueous solution viscosity of the PVA resin (a1) is preferably 21 to 50 mPa•s, particularly preferably 21.5 to 45 mPa•s, more preferably 22 to 40 mPa•s, as measured at 20°C. If the viscosity of the PVA resin (a1) is excessively low, the film as the packaging material tends to have a reduced mechanical strength. If the viscosity of the PVA resin (a1) is excessively high, the viscosity of the aqueous solution to be used for the film formation tends to be increased, thereby reducing the productivity.

Further, the PVA resin (a1) is preferably the anionic group-modified PVA, particularly the carboxyl group-modified PVA resin, more preferably the maleic acid-modified PVA. The PVA resin (a1) preferably has a modification degree of 1 to 15 mol %, more preferably 1.5 to 12 mol %, particularly preferably 2 to 6 mol %, especially preferably 2 to 4 mol %. If the modification degree of the PVA resin (a1) is excessively small, the solubility of the film in water tends to be reduced. If the modification degree of the PVA resin (a1) is excessively great, the productivity and the biodegradability of the PVA resin tend to be reduced. Further, the blocking of the film is liable to occur.

In the embodiment (1), a modified PVA resin that satisfies the requirements for the viscosity and the saponification degree defined by the present disclosure with respect to the modified PVA resin for the PVA resin (a1) may be used as the modified PVA resin for the PVA resin (a2).

The PVA resin (a2) is preferably the anionic group-modified PVA resin, particularly the carboxyl group-modified PVA resin, more preferably the maleic acid-modified PVA resin.

In the embodiment (2), in which the PVA resin (a2) is the unmodified PVA, the average saponification degree of the PVA resin (a2) is preferably not less than 85 mol %, particularly preferably 87 to 99.9 mol %, and more preferably 90 to 99.5 mol %, especially preferably 92 to 99 mol %, more preferably 93 to 98 mol %, for improvement of the solubility of the film in the deep drawing. If the average saponification degree of the PVA resin (a2) is excessively small, the solubility of the PVA film in water tends to be reduced, and the film tends to be poorer in uniform stretchability. If the average saponification degree of the PVA resin (a2) is excessively great, the solubility of the film in water also tends to be reduced.

The 4 mass % aqueous solution viscosity of the PVA resin (a2) is preferably higher than 21 mPa•s, preferably 21.5 to 60 mPa•s, particularly preferably 22 to 55 mPa•s, more preferably 23 to 50 mPa•s, especially preferably 25 to 45 mPa•s, as measured at 20°C. If the viscosity of the PVA resin (a2) is excessively low, the film tends to be poorer in uniform stretchability. If the viscosity of the PVA resin (a2) is excessively high, the viscosity of the aqueous solution to be used for the film formation tends to be increased, thereby reducing the productivity.

In the embodiment (2), the mass ratio (a1)/(a2) of the PVA resin (a1) to the PVA resin (a2) is preferably 98/2 to 55/45, particularly preferably 95/5 to 60/40, more preferably 94/6 to 70/30, especially preferably 93/7 to 80/20, from the viewpoint of balanced film properties, i.e., the uniform stretchability of the film, the solubility of the film in water, and the water sealability of the film.

If the proportion of the PVA resin (a2) is excessively small, it is difficult to provide the effect of the uniform stretchability, and the film tends to be poorer in water sealability. If the proportion of the PVA resin (a1) is excessively small, the solubility of the film tends to be reduced over time.

In the embodiment (3), in which the PVA resin (a1) is the unmodified PVA, the average saponification degree of the PVA resin (a1) is preferably 80 to 98 mol %, particularly preferably 82 to 95 mol %, more preferably 85 to 93 mol %, especially preferably 86 to 90 mol %, from the viewpoint of the solubility and the mechanical properties of the film. If the average saponification degree of the PVA resin (a1) is excessively small or great, the solubility of the film in water tends to be reduced.

In the embodiment (3), an unmodified PVA that satisfies the requirements for the viscosity and the saponification degree defined by the present disclosure with respect to the unmodified PVA for the PVA resin (a1) may be used as the unmodified PVA for the PVA resin (a2).

The PVA resin (A) of the present disclosure preferably has an average saponification degree of not less than 85 mol %, particularly preferably 86 to 99.9 mol %, more preferably 88 to 99.5 mol %, especially preferably 90 to 99.0 mol %, more preferably 92 to 98.5 mol %, still more preferably 93 to 98 mol %.

If the average saponification degree of the PVA resin (A) is excessively small, the solubility of the PVA film in water tends to be reduced, or the solubility of the film tends to be reduced over time depending on the pH of the chemical agent packaged with the film. If the average saponification degree of the PVA resin (A) is excessively great, the solubility of the film in water also tends to be reduced.

The PVA resin (A) to be used in the present disclosure preferably has a 4 mass % aqueous solution viscosity of 10 to 60 mPa•s, particularly preferably 15 to 55 mPa•s, more preferably 20 to 50 mPa•s, especially preferably 21 to 45 mPa•s, more preferably 22 to 40 mPa•s, as measured at 20°C. If the viscosity of the PVA resin (A) is excessively low, the PVA film as the packaging material tends to have a reduced mechanical strength. If the viscosity of the PVA resin (A) is excessively high, the viscosity of the aqueous solution to be used for the film formation tends to be increased, thereby reducing the productivity.

Further, the PVA resin (A) to be used in the present disclosure preferably has a modification degree of 0.5 to 20 mol %, particularly preferably 1 to 15 mol %, more preferably 1.5 to 12 mol %, especially preferably 1.5 to 6 mol %. If the modification degree of the PVA resin (A) is excessively small, the solubility of the film in water tends to be reduced. If the modification degree of the PVA resin (A) is excessively great, the productivity and the biodegradability of the PVA resin tend to be reduced. Further, the blocking of the PVA film is liable to occur.

### [Plasticizer (B)]

In the present disclosure, a plasticizer (B) is preferably added to the PVA resin (A) so as to impart the film with flexibility when the film is formed into a package. As the plasticizer (B), only one type of plasticizer may be used, or two or more types of plasticizers may be used in combination. However, the use of at least two types of plasticizers is preferred, because it is possible to impart the film with a higher toughness, to seal the film at a lower temperature, and to impart a sealed portion with a higher strength when the film is formed into a package.

One of the plasticizers for the plasticizer (B) is a polyhydric alcohol (b1) having a melting point of not lower than 80°C (hereinafter often referred to simply as "plasticizer (b1)") and another plasticizer for the plasticizer (B) is a polyhydric alcohol (b2) having a melting point of not higher than 50°C (hereinafter often referred to simply as "plasticizer (b2)"). This is preferred from the viewpoint of the toughness of the water-soluble film during the production of the water-soluble film and during the production of the package, the long-term shape stability of the liquid detergent package, the sealability of the film, and the like.

Many sugar alcohols, monosaccharides, and polysaccharides are usable as the polyhydric alcohol (b1) having a melting point of not lower than 80°C, i.e., as the plasticizer (b1). Examples of the plasticizer (b1) include: divalent alcohols such as salicyl alcohol (83°C), catechol (105°C), resorcinol (110°C), hydroquinone (172°C), bisphenol-A (158°C), bisphenol-F (162°C), and neopentyl glycol (127°C); trivalent alcohols such as phloroglucinol (218°C); tetravalent alcohols such as erythritol (121°C), threitol (88°C), and pentaerythritol (260°C); pentavalent alcohols such as xylitol (92°C), arabitol (103°C), fucitol (153°C), glucose (146°C), and fructose (104°C); hexavalent alcohols such as mannitol (166°C), sorbitol (95°C), and inositol (225°C); octavalent alcohols such as lactitol (146°C), sucrose (186°C), and trehalose (97°C); and nonavalent and higher-valent alcohols such as maltitol (145°C). These may be each used alone, or two or more of these may be used in combination. Parenthesized numerals indicate the melting points of the respective compounds.

Of the aforementioned polyhydric alcohols, polyhydric alcohols having a melting point of not lower than 85°C are preferred, and polyhydric alcohols having a melting point of not lower than 90°C are particularly preferred from the viewpoint of the tensile strength of the water-soluble film. The upper limit of the melting point is typically 300°C, particularly preferably 200°C.

The plasticizer (b1) preferably has 4 or more hydroxyl groups in its molecule from the viewpoint of compatibility with the PVA resin (A), and particularly preferably has 5 to 10 hydroxyl groups, more preferably 6 to 8 hydroxyl groups, in its molecule. Specifically, for example, sorbitol, sucrose, trehalose or the like is preferred.

The plasticizer (b1) preferably has a molecular weight of not less than 150, particularly preferably 160 to 500, more preferably 180 to 400, from the viewpoint of the toughness of the water-soluble film. Specifically, for example, sorbitol, sucrose or the like is preferred.

On the other hand, aliphatic alcohols are usable as the polyhydric alcohol (b2) having a melting point of not higher than 50°C, i.e., as the plasticizer (b2). Examples of the plasticizer (b2) include: divalent alcohols such as ethylene glycol (-13°C), diethylene glycol (-11°C), triethylene glycol (-7°C), propylene glycol (-59°C), tetraethylene glycol (-5.6°C), 1,3-propanediol (-27°C), 1,4-butanediol (20°C), 1,6-hexanediol (40°C), tripropylene glycol, and polyethylene glycols having a molecular weight of not greater than 2,000; and trivalent and higher-valent alcohols such as glycerin (18°C), diglycerin, and triethanolamine (21°C). These may be each used alone, or two or more of these may be used in combination. Parenthesized numerals indicate the melting points of the respective compounds. Of the aforementioned polyhydric alcohols, polyhydric alcohols having a melting point of not higher than 30°C are particularly preferred, and polyhydric alcohols having a melting point of not higher than 20°C are more preferred from the viewpoint of the flexibility of the water-soluble film. The lower limit of the melting point is typically -80°C, preferably -10°C, particularly preferably 0°C.

Further, the plasticizer (b2) preferably has 4 or less hydroxyl groups, particularly preferably 3 or less hydroxyl groups, in its molecule for easier control of the flexibility of the film at around a room temperature (25°C). Specifically, for example, glycerin or the like is preferred.

The plasticizer (b2) preferably has a molecular weight of not higher than 100, particularly preferably 50 to 100, more preferably 60 to 95, from the viewpoint of easier control of the flexibility of the film. Specifically, for example, glycerin or the like is preferred.

An additional plasticizer (b3) may be used in combination with the aforementioned plasticizers (b1) and (b2). Examples of the plasticizer (b3) include: alcohols such as trimethylolpropane (58°C), diethylene glycol monomethyl ether, cyclohexanol, carbitol, and polypropylene glycol; ethers such as dibutyl ether; carboxylic acids such as stearic acid, oleic acid, linoleic acid, linolenic acid, sorbic acid, citric acid, and adipic acid; ketones such as cyclohexanone; amines such as monoethanolamine, triethanolamine, ethylenediamine, and imidazole compounds; and amino acids such as alanine, glycine, aspartic acid, glutamic acid, histidine, lysine, and cysteine. These may be each used alone, or two or more of these may be used in combination.

The proportion of the plasticizer (B) is preferably not less than 20 parts by mass, particularly preferably 25 to 70 parts by mass, more preferably 30 to 60 parts by mass, especially preferably 35 to 50 parts by mass, based on 100 parts by mass of the PVA resin (A). If the proportion of the plasticizer (B) is excessively small, the water-soluble film tends to be poorer in long-term toughness when being formed into a package with liquid such as liquid detergent packaged therein. If the proportion of the plasticizer (B) is excessively great, the mechanical strength tends to be reduced.

The mass ratio (b1)/(b2) between the plasticizer (b1) and the plasticizer (b2) is preferably 0.1 to 5, particularly preferably 0.2 to 4.5, more preferably 0.3 to 4, especially preferably 0.4 to 3.5, more preferably 0.5 to 3, still more preferably 0.7 to 2. If the mass ratio is excessively small, the water-soluble film tends to be excessively soft, thereby suffering from the blocking. If the mass ratio is excessively great, the water-soluble film tends to be excessively hard to be thereby brittle in a lower humidity environment. Further, the water-soluble film tends to be poorer in long-term shape stability when being formed into a liquid detergent package.

The proportion of the plasticizer (b1) is preferably 5 to 40 parts by mass, particularly preferably 8 to 30 parts by mass, more preferably 10 to 25 parts by mass, based on 100 parts by mass of the PVA resin (A), and the proportion of the plasticizer (b2) is preferably 5 to 40 parts by mass, particularly preferably 10 to 35 parts by mass, more preferably 15 to 30 parts by mass, based on 100 parts by mass of the PVA resin (A).

If the proportion of the plasticizer (b1) is excessively small, the water-soluble film tends to be excessively hard. Further, the water-soluble film tends to be poorer in long-term shape stability when being formed into a liquid detergent package. If the proportion of the plasticizer (b1) is excessively great, the water-soluble film tends to be excessively soft. If the proportion of the plasticizer (b2) is excessively small, the water-soluble film tends to be excessively hard to be thereby brittle in the lower humidity environment. If the proportion of the plasticizer (b2) is excessively great, the water-soluble film tends to be excessively soft, thereby suffering from the blocking.

Further, the total proportion of the plasticizer (b1) and the plasticizer (b2) is preferably not less than 70 mass %, more preferably not less than 80 mass %, particularly preferably not less than 87 mass %, more preferably not less than 90 mass %, especially preferably not less than 95 mass %, based on the overall mass of the plasticizer (B). Most preferably, the plasticizer (B) includes the plasticizer (b1) and the plasticizer (b2) alone. If the total proportion of the plasticizers (b1) and (b2) is excessively small, the water-soluble film tends to have a lower mechanical strength. Further, the water-soluble film tends to be poorer in long-term shape stability when being formed into a liquid detergent package.

### [Filler (C)]

In the present disclosure, a filler (C) may be further added to the PVA resin (A) as required.

The filler (C) is used to impart the film with an antiblocking property. Examples of the filler (C) include an organic filler (c1) and an inorganic filler (c2), which may be used alone or in combination. Of these, the organic filler (c1) is preferably used.

The filler (C) preferably has an average particle diameter of 0.1 to 50 µm, particularly preferably 1 to 35 µm. The average particle diameter of the filler (C) is calculated based on a D50 value of cumulative volume distribution (a particle diameter for cumulative 50% of particles) measured by means of a particle size distribution measuring apparatus of laser diffraction type.

The organic filler (c1) means organic compound particles (primary particles) in needle form, bar form, lamellar form, scale form, spherical form or any given form, or agglomerates (secondary particles) of the organic compound particles.

The organic filler (c1) is mainly selected from polymer compounds. Examples of the polymer compounds include melamine resins, polymethyl (meth)acrylate resins, polystyrene resins, starches, polylactic acids, and other biodegradable resins. Of these, the polymethyl (meth)acrylate resins, the polystyrene resins, and biodegradable resins such as the starches are preferred. Particularly, the starches are preferred from the viewpoint of the dispersibility thereof in the PVA resin (A).

Examples of the starches include raw starches (corn starch, potato starch, sweet potato starch, wheat starch, Kissaba starch, sago starch, tapioca starch, sorghum starch, rice starch, pea starch, kudzu starch, bracken starch, lotus starch, water chestnut starch, and the like), physically modified starches (α-starch, fractionated amylose, moist heat-treated starch, and the like), enzyme-modified starches (hydrolyzed dextrin, enzyme-decomposed dextrin, amylose, and the like), chemically degraded starches (acid-treated starch, hypochlorous acid-oxidized starch, dialdehyde starch, and the like), and chemically modified starch derivatives (esterified starch, etherified starch, cationized starch, crosslinked starch, and the like). Of these, the raw starches, particularly the corn starch and the rice starch, are preferably used from the viewpoint of availability and economy.

The organic filler (c1) preferably has an average particle diameter of 5 to 50 µm, particularly preferably 10 to 40 µm, more preferably 15 to 35 µm. If the average particle diameter is excessively small, the PVA film is more susceptible to the blocking. If the average particle diameter is excessively great, the particles of the filler are liable to agglomerate to be thereby deteriorated in dispersibility. Further, the PVA film tends to suffer from pinholes when being stretched in the film processing.

The inorganic filler (c2) means inorganic compound particles (primary particles) in needle form, bar form, lamellar form, scale form, spherical form or any given form, or agglomerates (secondary particles) of the inorganic compound particles.

Examples of the inorganic filler (c2) include inorganic oxide compounds such as silica (silicon dioxide), diatom earth, titanium oxide, calcium oxide, magnesium oxide, aluminum oxide, barium oxide, germanium oxide, tin oxide, and zinc oxide, talc, clay, kaolin, mica, asbestos, gypsum, graphite, glass balloons, glass beads, calcium sulfate, barium sulfate, ammonium sulfate, calcium sulfite, calcium carbonate, calcium carbonate whisker, magnesium carbonate, dawsonite, dolomite, potassium titanate, carbon black, glass fibers, alumina fibers, boron fibers, processed mineral fibers, carbon fibers, hollow carbon spheres, bentonite, montmorillonite, copper powder, sodium sulfate, potassium sulfate, zinc sulfate, copper sulfate, iron sulfate, magnesium sulfate, aluminum sulfate, aluminum potassium sulfate, ammonium nitrate, sodium nitrate, potassium nitrate, aluminum nitrate, ammonium chloride, sodium chloride, potassium chloride, magnesium chloride, calcium chloride, sodium phosphate, and potassium chromate. These may be each used alone, or two or more of these may be used in combination.

Of these, the inorganic oxide compounds and talc are preferred because of their excellent hydrogen bond effect with respect to the PVA resin (A) and their water sealability improving effect. Particularly, titanium oxide, talc or silica is preferably used, and silica is more preferably used.

The inorganic filler (c2) preferably has an average particle diameter of 1 to 20 µm, particularly preferably 2 to 15 µm, more preferably 3 to 10 µm. If the average particle diameter is excessively small, the PVA film tends to be poorer in flexibility and toughness, and is more susceptible to the blocking. If the average particle diameter is excessively great, the film tends to suffer from pinholes when being stretched in the film processing.

The proportion of the filler (C) is preferably 1 to 30 parts by mass, particularly preferably 1.5 to 25 parts by mass, more preferably 2 to 20 parts by mass, based on 100 parts by mass of the PVA resin (A). If the proportion of the filler (C) is excessively small, the PVA film is more susceptible to the blocking. If the proportion of the filler (C) is excessively great, the PVA film tends to be poorer in flexibility and toughness.

From the viewpoint of the package breakage resistance when a package is formed from the film by the deep drawing and immersed in water, the proportion of the filler (C) is preferably not greater than 6 parts by mass, preferably not greater than 5.5 parts by mass, not greater than 5.0 parts by mass, not greater than 4.5 parts by mass, not greater than 4.0 parts by mass, not greater than 3.5 parts by mass, not greater than 3.0 parts by mass, not greater than 2.5 parts by mass, not greater than 2.0 parts by mass, not greater than 1.5 parts by mass, not greater than 1.0 part by mass, not greater than 0.5 parts by mass, based on 100 parts by mass of the PVA resin (A). On the other hand, the lower limit value is preferably 0 part by mass, more preferably not less than 0.01 part by mass, not less than 0.05 parts by mass, not less than 0.1 part by mass, based on 100 parts by mass of the PVA resin (A).

### [Surfactant (D)]

In the present disclosure, a surfactant (D) or the like may be further added to the PVA resin (A) as required.

In the present disclosure, the surfactant (D) is used for improvement of the peelability of the PVA film when the film is removed from a cast surface in the production of the PVA film. A nonionic surfactant, a cationic surfactant or an anionic surfactant is typically used as the surfactant (D). Examples of the surfactant (D) include polyoxyethylene nonyl phenyl ether, polyoxyethylene octyl nonyl ether, polyoxyethylene dodecyl phenyl ether, polyoxyethylene alkyl allyl ethers, polyoxyethylene sorbitan monolaurate, polyoxyethylene sorbitan monopalmitate, polyoxyethylene sorbitan monostearate, polyoxyethylene sorbitan monooleate, polyoxyalkylene alkyl ether phosphate monoethanolamine salts, and polyoxyethylene alkylamino ethers such as polyoxyethylene laurylamino ether and polyoxyethylene stearylamino ether. These may be each used alone, or two or more of these may be used in combination. Of these, the polyoxyalkylene alkyl ether phosphate monoethanolamine salts and polyoxyethylene laurylamino ether are preferred from the viewpoint of production stability.

These surfactants may be each used alone, or two or more of these surfactants may be used in combination as the surfactant (D).

The proportion of the surfactant (D) is preferably 0.01 to 3 parts by mass, particularly preferably 0.05 to 2.5 parts by mass, more preferably 0.1 to 2 parts by mass, based on 100 parts by mass of the PVA resin (A). If the proportion of the surfactant (D) is excessively small, the PVA film tends to have poorer peelability when being removed from a cast surface of a film forming apparatus in the film production, thereby reducing the productivity. If the proportion of the surfactant (D) is excessively great, the PVA film disadvantageously tends to have a reduced adhesive strength when being sealed in production of a package.

The PVA film may contain an additional water-soluble polymer other than the PVA resin (A) (e.g., sodium polyacrylate, polyethylene oxide, polyvinyl pyrrolidone, dextrin, chitosan, chitin, methylcellulose, hydroxyethylcellulose or the like), perfume, rust preventing agent, colorant, bulking agent, defoaming agent, UV absorber, liquid paraffins, fluorescent brightener, and bitter component (e.g., denatonium benzoate or the like), as long as the object of the present disclosure is not impaired. These may be each used alone, or two or more of these may be used in combination.

In the present disclosure, the PVA film preferably further contains an antioxidant for suppression of yellowing. Examples of the antioxidant include sulfites such as sodium sulfite, potassium sulfite, calcium sulfite, and ammonium sulfite, tartaric acid, ascorbic acid, sodium thiosulfate, catechol, and Rongalite. Of these, the sulfites are preferred, and sodium sulfite is particularly preferred. The proportion of the antioxidant is preferably 0.1 to 10 parts by mass, particularly preferably 0.2 to 5 parts by mass, more preferably 0.3 to 3 parts by mass, based on 100 parts by mass of the PVA resin (A).

### <Production of water-soluble PVA film>

In the present disclosure, a PVA resin composition containing the PVA resin (A), preferably the plasticizer (B), and optionally the filler (C) and the surfactant (D) described above is prepared. Then, the water-soluble PVA film is produced from the PVA resin composition by performing, in this order: [I] a dissolution step; [II] a film formation step; and [III] a winding step.

### [(I) Dissolution step]

In the dissolution step, the PVA resin composition is dissolved or dispersed in water, whereby an aqueous solution or an aqueous dispersion is prepared as a film formation material.

A normal-temperature dissolution method, a high-temperature dissolution method or a pressure dissolution method is typically employed in the dissolution step of dissolving the PVA resin composition in water. Particularly, the high-temperature dissolution method and the pressure dissolution method are preferred, because these methods reduce the amount of the undissolved matter and ensure a higher productivity.

A dissolution temperature for the high-temperature dissolution method is typically 80°C to 100°C, preferably 90°C to 95°C, and a dissolution temperature for the pressure dissolution method is typically 80°C to 130°C, preferably 90°C to 120°C.

A dissolution period is properly adjusted depending on the dissolution temperature and the pressure for the dissolution, but is typically 1 to 20 hours, preferably 2 to 15 hours, particularly preferably 3 to 10 hours. If the dissolution period is excessively short, the undissolved matter tends to remain. If the dissolution period is excessively long, the productivity tends to be reduced.

In the dissolution step, a paddle, a full-zone stirring blade, a max-blend stirring blade, a twister, an anchor stirring blade, a ribbon, a propeller or the like is used as a stirring blade.

After the dissolution, the resulting PVA resin aqueous solution is defoamed. Exemplary defoaming methods include stationary defoaming method, vacuum defoaming method, and twin-screw extrusion defoaming method. Particularly, the stationary defoaming method and the twin-screw extrusion defoaming method are preferred.

A temperature for the stationary defoaming method is typically 50°C to 100°C, preferably 70°C to 95°C, and a defoaming period is typically 2 to 30 hours, preferably 5 to 20 hours.

The film formation material preferably has a solid concentration of 10 to 60 mass %, particularly preferably 12 to 50 mass %, more preferably 15 to 40 mass %. If the solid concentration is excessively low, the productivity of the film tends to be reduced. If the solid concentration is excessively high, the film formation material tends to have an excessively high viscosity, requiring a longer period of time for defoaming the film formation material. Further, a die line tends to occur on the film during the film formation.

### [[II] Film formation step]

In the film formation step, the film formation material prepared in the dissolution step is formed into a film, which is dried as required. Thus, the water-soluble PVA film is produced as having a water content of less than 15 mass %.

Exemplary film formation methods include melt extrusion method and casting method. From the viewpoint of the accuracy of the thickness of the film, the casting method is preferred.

In the casting method, the film formation material is cast on a cast surface such as a metal surface of an endless belt or a drum roll through a slit of a T-slit die or the like. The film formation material thus cast is dried, whereby the water-soluble PVA film is produced.

The temperature of the film formation material in a film formation material discharge part such as the T-slit die is preferably 60°C to 98°C, particularly preferably 70°C to 95°C. If the temperature is excessively low, the film formation material tends to have a higher viscosity, thereby reducing the productivity of the water-soluble PVA film. If the temperature is excessively high, the film formation material tends to suffer from foaming or the like.

After the casting, the film formation material is dried on the cast surface typically by heating the cast surface such as the metal surface of the endless belt or the drum roll. The surface temperature of the cast surface is preferably 50°C to 150°C, particularly preferably 60°C to 140°C. If the surface temperature is excessively low, the film tends to have a higher water content due to insufficient drying, thereby suffering from the blocking. If the surface temperature is excessively high, the film formation material is liable to foam, resulting in film formation failure.

Exemplary methods for the drying in the film formation step include: a drying method using a heat roll; a drying method in which hot air is applied to the film by means of a floating dryer; and a drying method using a far infrared device or a dielectric heating device. These methods may be employed in combination.

After the film formation material is dried to a water content of lower than 25 mass % by any of the aforementioned drying methods, the resulting water-soluble PVA film is peeled off from the cast surface (or from the drying heat roll when the film is further dried on the heat roll after being peeled off from the cast surface). The water-soluble PVA film thus peeled off from the cast surface (or from the drying heat roll) is conveyed to be cooled in an environment at 10°C to 35°C.

For prevention of the curling of the film, a heat treatment is preferably performed after the film formation step [II].

The heat treatment is typically performed by means of a heat roll. Other exemplary heat treatment methods include a heat treatment method in which hot air is applied to the film by means of a floating dryer, and a heat treatment method using a far infrared device or a dielectric heating device. In the present disclosure, the heat roll is preferably used for the heat treatment from the viewpoint of the productivity. A plurality of heat rolls may be used for the heat treatment.

### [[III] Winding step]

In the winding step, the water-soluble PVA film peeled off from the cast surface in the film formation step is conveyed and wound around a core pipe (S1) into a film roll.

The resulting film roll may be supplied as a product on an as-is basis. Preferably, the water-soluble PVA film thus wound up may be rewound around a core pipe (S2) having a length corresponding to a desired film width, and supplied in the form of a film roll having a desired size.

Thus, the water-soluble PVA film of the present disclosure can be produced.

The water-soluble PVA film production process is preferably performed in an environment at 10°C to 35°C, particularly preferably 15°C to 30°C. A humidity for the production process is typically not higher than 70% RH, and the lower limit of the humidity is 0% RH.

The thickness of the water-soluble PVA film is properly selected according to the use application or the like of the film, but is preferably 10 to 120 µm, particularly preferably 15 to 110 µm, more preferably 20 to 100 µm. If the thickness of the water-soluble PVA film is excessively small, the film tends to have a lower mechanical strength. If the thickness of the water-soluble PVA film is excessively great, the film tends to be dissolved at a lower dissolution speed, and the film formation efficiency tends to be reduced.

The width of the water-soluble PVA film is properly selected according to the use application or the like of the film, but is preferably 300 to 5,000 mm, particularly preferably from 500 to 4,000 mm, more preferably 600 to 3,000 mm. If the width of the film is excessively small, the production efficiency tends to be reduced. If the width of the film is excessively great, it tends to be difficult to control the slackness and the thickness of the film.

Further, the length of the water-soluble PVA film is properly selected according to the use application or the like of the film, but is preferably 100 to 20,000 m, particularly preferably 800 to 15,000 m, more preferably 1,000 to 10,000 m. If the length of the film is excessively small, the film tends to require troublesome film switching. If the length of the film is excessively great, the resulting film roll tends to have a poorer appearance due to tight winding and an excessively heavy weight.

The water-soluble PVA film may have plain surfaces, but one or both of the surfaces of the water-soluble PVA film are preferably subjected to a texturing process so as to be imparted with an emboss pattern, a minute uneven pattern, a special engraved pattern or the like for the antiblocking property, the slidability during the processing, and the appearance, and for suppression of adhesion between film products.

A temperature for the texturing process is typically 60°C to 150°C, preferably 80°C to 140°C. A pressure for the texturing process is typically 2 to 8 MPa, preferably 3 to 7 MPa. A period for the texturing process depends on the texturing pressure and the film formation rate, but is typically 0.01 to 5 seconds, preferably 0.1 to 3 seconds.

After the texturing process, as required, the water-soluble PVA film may be subjected to a cooling process for prevention of unintended thermal stretching of the film.

The water-soluble PVA film thus produced preferably has a water content of 3 to 15 mass %, particularly preferably 5 to 9 mass %, more preferably 6 to 8 mass %, for the mechanical strength and the sealability. If the water content is excessively low, the film tends to be excessively hard to be thereby poorer in formability when being formed into the package and in the impact resistance of the package. If the water content is excessively high, the blocking is liable to occur. The water content of the water-soluble PVA film may be controlled by properly setting conditions for the drying and the moisture conditioning.

The water content is measured in conformity with JIS K6726 3.4. The resulting volatile content is defined as the water content.

The water-soluble PVA film thus produced is excellent in shape stability during long-term storage, and impact resistance at lower temperatures. Therefore, the water-soluble PVA film is useful for various packaging applications, particularly for unit packaging applications for chemical agents such as agricultural agents and detergents, and for (water pressure) transfer films, sanitary supplies such as sanitary napkins and disposable diapers, waste disposal supplies such as ostomy bags, medical supplies such as blood-absorbing sheets, and temporary base materials for seeding sheets, seeding tapes, and embroidery bases.

Particularly, the water-soluble PVA film can be advantageously used for unit packaging applications for chemical agents such as laundry detergents and dishwashing detergents.

### <Chemical agent package>

A chemical agent package according to another embodiment of the present disclosure is a package produced by packaging a chemical agent with the water-soluble PVA film. The chemical agent is packaged with the water-soluble film and, therefore, when the entire chemical agent package is put in water, the water-soluble film is dissolved in water, and then the chemical agent is dissolved or dispersed in water to exhibit its effect. The chemical agent package is advantageous for a chemical agent package in which a relatively small amount (single dose) of the chemical agent is packaged.

Examples of the chemical agent to be packaged include agricultural chemicals such as pesticide, disinfectant, and herbicide, fertilizers, and detergents. The detergents such as the laundry detergents and the dishwashing detergents are particularly preferred. The chemical agent may be liquid or solid. The liquid chemical agent is in a liquid form. The solid chemical agent may be in granular form, tablet form or powdery form. The chemical agent is preferably dissolved or dispersed in water for use. In the present disclosure, the chemical agent package particularly preferably contains a liquid detergent. The pH of the chemical agent may be alkaline, neutral or acidic.

The liquid detergent preferably has a pH value of 6 to 12, particularly preferably 6.5 to 11, more preferably 7 to 8, when being dissolved or dispersed in water. The liquid detergent preferably has a water content of not greater than 15 mass %, particularly preferably 0.1 to 10 mass %, more preferably 0.1 to 7 mass %. With this arrangement, the water-soluble film is free from gelation and insolubilization, and is excellent in water solubility.

The pH value is measured in conformity with JIS K3362 8.3, and the water content is measured in conformity with JIS K3362 7.21.3.

The chemical agent package maintains its shape with the liquid detergent contained therein during the storage thereof. When the chemical agent package is used (e.g., for laundry washing), the package bag (water-soluble film) is brought into contact with water to be dissolved in water, whereby the contained chemical agent flows out of the package.

A known method may be employed for packaging the chemical agent such as the liquid detergent with the water-soluble PVA film of the present disclosure to produce the chemical agent package.

The chemical agent package is produced, for example, by bonding two water-soluble PVA films. One of the films (bottom film) is vacuum-fixed onto a die disposed in a lower portion of a forming machine, and the other film (top film) is vacuum-fixed to an upper portion of the forming machine. After the chemical agent such as the liquid detergent is put in a formed portion of the bottom film, the top film is press-bonded to the bottom film. After the press bonding, the resulting package is released from the vacuum.

Where the film is stretched to 2.5 or more times or the thickness of the thinnest portion of the package is not greater than 35%, preferably not greater than 30%, of the original thickness of the film when the film is formed into the package, this film formation method is regarded as the deep drawing.

Exemplary methods for press-bonding the films after the chemical agent is put in the formed film portion include: (1) heat sealing method; (2) water sealing method; and (3) adhesive sealing method, among which the water sealing method (2) is versatile and advantageous.

The chemical agent package typically has a smooth surface. However, the outer surface of the package (the water-soluble PVA film) may be textured so as to be imparted with an emboss pattern, a minute uneven pattern, a special engraved pattern or the like for the antiblocking property, the slidability during the processing, and the appearance, and for suppression of adhesion between products (packages).

The chemical agent retaining period of the chemical agent package of the present disclosure (package breakage time) is typically longer than 30 seconds, preferably not shorter than 33 seconds, more preferably not shorter than 35 seconds, for suppression of the early leakage and the early dissolution of the liquid. In the case of the laundry liquid detergent package, the upper limit of the chemical agent retaining period is preferably not longer than 300 seconds depending on the type of the chemical agent and the use method.

The package breakage time of the chemical agent package is determined by allowing the chemical agent package to stand still in an environment at 23°C at 50% RH for one day, then allowing the chemical agent package to float in ion-exchanged water at 20°C, and measuring time elapsed until the leakage of the chemical agent begins due to the breakage of the package.

### EXAMPLES

The embodiments of the present disclosure will hereinafter be described more specifically by way of examples thereof. However, it should be understood that the present disclosure be not limited to the examples within the scope of the present disclosure. In the following examples, "parts" and "%" are based on mass.

The following ingredients were prepared for water-soluble films.

### <PVA resins>

- PVA resin (a-1): A carboxyl group-modified PVA resin having a 4% aqueous solution viscosity of 24 mPa•s at 20°C, an average saponification degree of 94 mol %, and a monomethyl maleate modification degree of 2.0 mol %
- PVA resin (a-2): An unmodified PVA having a 4% aqueous solution viscosity of 27.5 mPa•s at 20°C, and an average saponification degree of 97.7 mol %
- PVA resin (a-3): An unmodified PVA having a 4% aqueous solution viscosity of 18 mPa•s at 20°C, and an average saponification degree of 88 mol %
- PVA resin (a-4): A carboxyl group-modified PVA resin having a 4% aqueous solution viscosity of 22 mPa•s at 20°C, an average saponification degree of 94 mol %, and a monomethyl maleate modification degree of 2.0 mol %
- PVA resin (a-5): An unmodified PVA having a 4% aqueous solution viscosity of 43 mPa•s at 20°C, and an average saponification degree of 88 mol %
- PVA resin (a-6): An unmodified PVA having a 4% aqueous solution viscosity of 54 mPa•s at 20°C, and an average saponification degree of 98 mol %
- PVA resin (a-7): An unmodified PVA having a 4% aqueous solution viscosity of 6.6 mPa•s at 20°C, and an average saponification degree of 92.5 mol %
- PVA resin (a-8): A carboxyl group-modified PVA resin having a 4% aqueous solution viscosity of 30 mPa•s at 20°C, an average saponification degree of 94 mol %, and a monomethyl maleate modification degree of 2.0 mol %
- PVA resin (a-9): An unmodified PVA having a 4% aqueous solution viscosity of 22.5 mPa•s at 20°C, and an average saponification degree of 88 mol %

### <Other components>

- Plasticizer (b1): Sorbitol
- Plasticizer (b2): Glycerin
- Filler (c1): Corn starch (having an average particle diameter of 20 µm)
- Surfactant (d1): Polyoxyalkylene alkyl ether phosphate monoethanolamine salt

### <Example 1>

First, 90 parts of the modified PVA (a-1) and 10 parts of the unmodified PVA (a-2) as the PVA resin (A), 20 parts of sorbitol (b1) and 20 parts of glycerin (b2) as the plasticizer (B), 0.2 parts of the polyoxyalkylene alkyl ether phosphate monoethanolamine salt (d1) as the surfactant (D), and water were mixed together, and these ingredients were dissolved and dispersed in water. Thus, a resin composition aqueous dispersion having a solid concentration of 22% was prepared as a film formation material.

The film formation material thus prepared was cast on a polyethylene terephthalate film, and the resulting film was passed through a 3-m long drying chamber (at 105°C) at a speed of 0.350 m/minute to be thereby dried. Thus, a PVA film (water-soluble film) having a thickness of 87 µm was prepared.

With the use of the water-soluble PVA film of Example 1 thus prepared, a chemical agent package was produced in the following manner by means of a package producing apparatus available from Engel Corporation.

More specifically, a bottom film of the water-soluble PVA film was fixed onto a die (for a package to be formed as having a length of 45 mm, a width of 42 mm and a height of 30 mm) disposed in a lower portion of the apparatus, and a top film of the water-soluble PVA film was fixed to an upper portion of the apparatus. The bottom film was heated for 10 seconds by a dryer capable of blowing hot air at 90°C, and vacuum-formed on the die. Thereafter, 34 mL of a liquid detergent solution (having a formulation containing 12.7% of propylene glycol, 7.5% of glycerin, 12.7% of ethanolamine, 57% of a surfactant, and 9.3% of water, and having a pH of 6.9) of P&G's ARIEL BIOSCIENCE GEL BALL was put in a formed bottom film portion of the water-soluble PVA film. Then, 0.25 g of water was applied over the entire surface of the top film (having a width of 80 mm and a length of 140 mm), and then the top film and the bottom film were pressed for 30 seconds to be thereby press-bonded to each other. Thereafter, the bottom film was released from vacuum. Thus, a chemical agent package (liquid detergent package) having a thinnest-portion thickness of 20 µm was produced.

### <Example 2 and Comparative Examples 1 and 2>

Water-soluble PVA films were each prepared in substantially the same manner as in Example 1, except that the formulation was changed as shown in Table 1. Then, liquid detergent packages were produced with the use of the water-soluble PVA films thus prepared.

The physical properties of the liquid detergent packages thus produced were each measured and evaluated in the following manner. The results are shown below in Table 1.

### [Package breakage time]

The liquid detergent packages thus produced were each allowed to stand still in an environment at 23°C at 50% RH for one day, and then allowed to float in ion-exchanged water at 20°C. Time elapsed until the leakage of the detergent began due to the breakage of the package was measured.

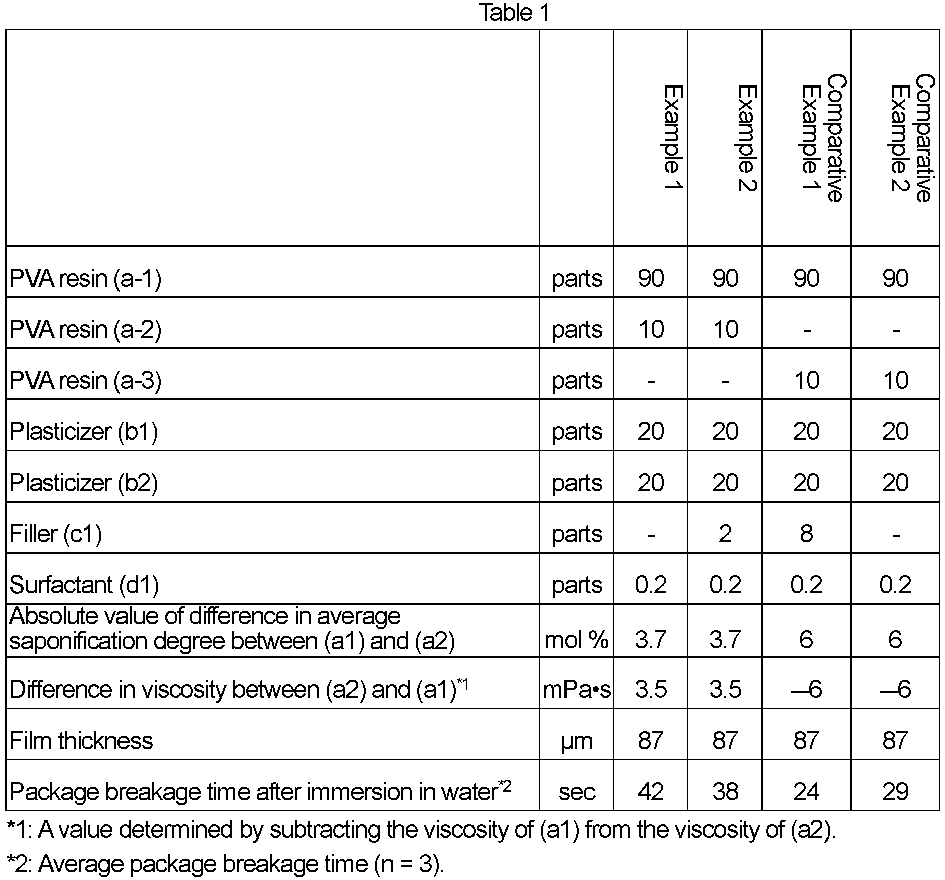

The results shown in Table 1 indicate that the liquid detergent packages produced with the use of the films of Examples 1 and 2 were suitable for practical applications without the early leakage of the chemical agent (liquid detergent or the like), because the liquid detergent was released from the packages after a lapse of a certain period of time from the immersion of the packages in water. The time elapsed until the release of the chemical agent due to the breakage of the package (chemical agent retaining period) is typically preferably not shorter than 30 seconds.

In contrast, the liquid detergent packages produced with the use of the films of Comparative Examples 1 and 2 containing the PVA resins (a1) and (a3) not satisfying the requirements specified by the present disclosure, i.e., with an average saponification degree difference of greater than 5 mol %, were not suitable for practical applications, because the packages were each broken in a shorter period of time after being immersed in water.

### [EXAMPLE 3]

First, 90 parts of the modified PVA (a-1) and 10 parts of the unmodified PVA (a-2) as the PVA resin (A), 20 parts of sorbitol (b1) and 20 parts of glycerin (b2) as the plasticizer (B), 2 parts of corn starch (c1) having an average particle diameter of 20 µm as the filler (C), 0.2 parts of the polyoxyalkylene alkyl ether phosphate monoethanolamine salt (d1) as the surfactant (D), and water were mixed together, and these ingredients were dissolved and dispersed in water. Thus, a resin composition aqueous dispersion having a solid concentration of 22% was prepared as a film formation material.

The film formation material thus prepared was cast on a polyethylene terephthalate film, and the resulting film was passed through a 3-m long drying chamber (at 105°C) at a speed of 0.350 m/minute to be thereby dried. Thus, a PVA film (water-soluble film) having a thickness of 87 µm was prepared.

With the use of the water-soluble PVA film of Example 3 thus prepared, a chemical agent package was produced in the following manner by means of a package producing apparatus available from Engel Corporation.

More specifically, a bottom film of the water-soluble PVA film was fixed onto a die (for a package to be formed as having a length of 45 mm, a width of 42 mm, and a height of 30 mm) disposed in a lower portion of the apparatus, and a top film of the water-soluble PVA film was fixed to an upper portion of the apparatus. The bottom film was heated for 10 seconds by a dryer capable of blowing hot air at 80°C, and vacuum-formed on the die. Thereafter, 34 mL of a commercially available laundry detergent (having a formulation containing 11% of propylene glycol, 7.5% of glycerin, 67% of a surfactant, and 14.2% of water, and having a pH of 7.5) was put in a formed bottom film portion of the water-soluble PVA film. Then, 0.25 g of water was applied over the entire surface of the top film (having a width of 80 mm and a length of 140 mm), and then the top film and the bottom film were pressed for 30 seconds to be thereby press-bonded to each other. Thereafter, the bottom film was released from vacuum. Thus, a chemical agent package (liquid detergent package) having a thinnest-portion thickness of 23 µm was produced.

### <Example 4 to 8 and Comparative Examples 3 and 4>

Water-soluble PVA films were each prepared in substantially the same manner as in Example 3, except that the formulation of the film was changed as shown in Table 2. Then, liquid detergent packages were produced with the use of the water-soluble PVA films thus prepared. The physical properties of the liquid detergent packages were each measured and evaluated in the aforementioned manner. The results are shown below in Table 2.

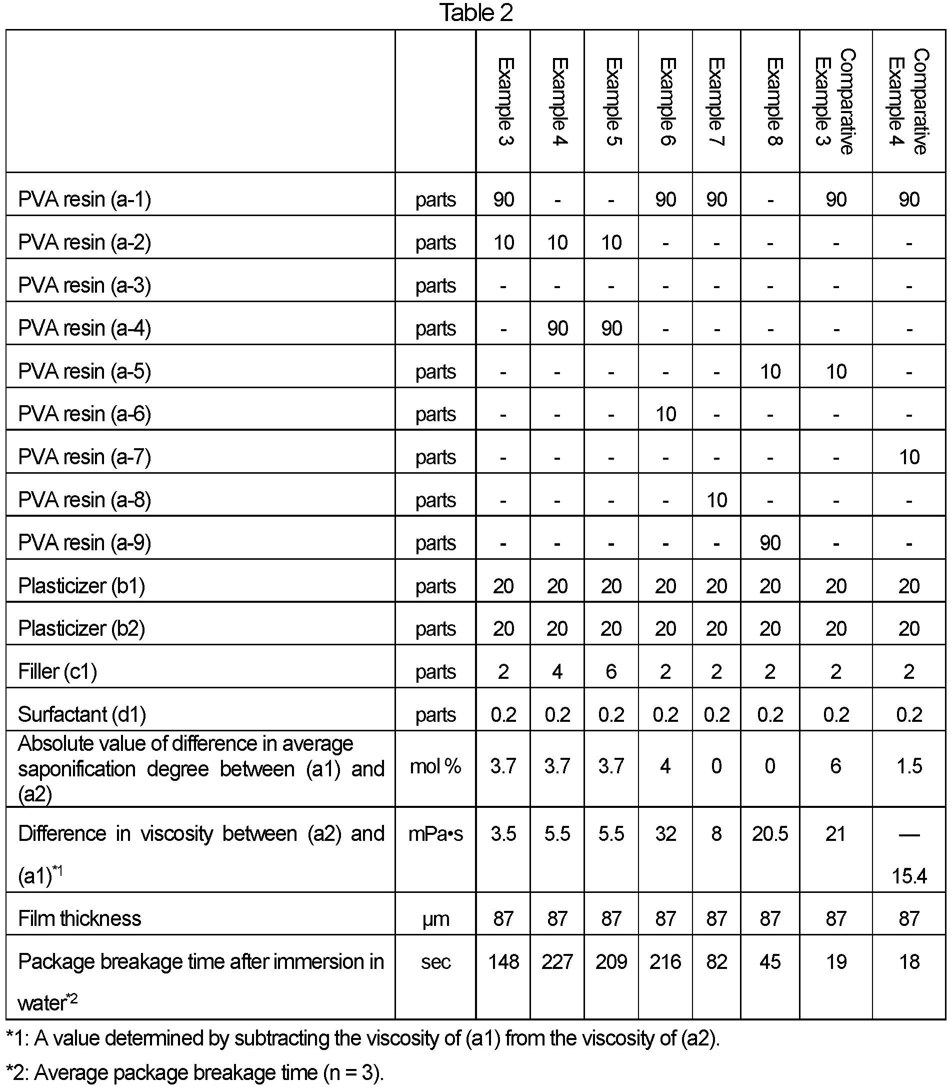

The results shown in Table 2 indicate that the liquid detergent packages produced with the use of the films of Examples 3 to 8 were suitable for practical applications without the early leakage of the chemical agent such as the liquid detergent, because the liquid detergent was released from the packages after a lapse of a certain period of time from the immersion of the packages in water.

In contrast, the liquid detergent packages produced with the use of the films of Comparative Examples 3 and 4 not satisfying the requirements specified by the present disclosure were not suitable for practical applications, because the packages were each broken in a shorter period time after being immersed in water.

While specific forms of the embodiments of the present disclosure have been shown in the aforementioned examples, the examples are merely illustrative of the disclosure but not limitative of the disclosure. It is contemplated that various modifications apparent to those skilled in the art could be made within the scope of the disclosure.

The water-soluble film of the present disclosure has an improved package breakage resistance when the package is formed from the film by deep drawing for packaging the chemical agent such as the liquid detergent and immersed in water. That is, the water-soluble film of the present disclosure is capable of suppressing the early leakage and the early dissolution of the chemical agent. Therefore, the water-soluble film of the present disclosure are useful for various packaging applications, particularly for individually packaging the chemical agents such as the laundry detergent and the dishwashing detergent.

## Claims

1. A water-soluble polyvinyl alcohol film mainly comprising a polyvinyl alcohol resin (A), wherein the polyvinyl alcohol resin (A) comprises:
a polyvinyl alcohol resin (a1) having a 4 mass % aqueous solution viscosity of not lower than 21 mPa•s at 20°C as a main component of the polyvinyl alcohol resin (A); and
a polyvinyl alcohol resin (a2) satisfying the following requirements (α) and (β) with respect to the polyvinyl alcohol resin (a1):
(α) the polyvinyl alcohol resin (a2) has a 4 mass % aqueous solution viscosity that is higher than the 4 mass % aqueous solution viscosity of the polyvinyl alcohol resin (a1) as measured at 20°C; and
(β) a difference in an average saponification degree between the polyvinyl alcohol resin (a1) and the polyvinyl alcohol resin (a2) is not greater than 5 mol % in absolute value.

2. The water-soluble polyvinyl alcohol film according to claim 1, wherein the polyvinyl alcohol resin (a1) and the polyvinyl alcohol resin (a2) are present in a mass ratio (a1)/(a2) of 99/1 to 50/50.

3. The water-soluble polyvinyl alcohol film according to claim 1 or 2, wherein the polyvinyl alcohol resin (a1) is a modified polyvinyl alcohol resin.

4. The water-soluble polyvinyl alcohol film according to any one of claims 1 to 3, wherein the polyvinyl alcohol resin (a2) is an unmodified polyvinyl alcohol.

5. The water-soluble polyvinyl alcohol film according to any one of claims 1 to 4, wherein the polyvinyl alcohol resin (a2) has an average saponification degree of 90 to 99.9 mol %.

6. The water-soluble polyvinyl alcohol film according to any one of claims 1 to 5, further comprising not greater than 6 parts by mass of a filler (C) based on 100 parts by mass of the polyvinyl alcohol resin (A).

7. A chemical agent package comprising:
a package bag formed from the water-soluble polyvinyl alcohol film according to any one of claims 1 to 6; and
a chemical agent packaged in the package bag.
